# EUROPEAN PATENT APPLICATION

(11) **EP 4 610 937 A1**
(43) Date of publication of application: **03.09.2025**
(21) Application number: 25159552.6
(22) Date of filing: 24.02.2025
(51) Int. Cl.: G06V 10/25, G06V 10/80, G06V 10/82

(54) **INFORMATION PROCESSING APPARATUS, INFORMATION PROCESSING METHOD, GENERATION METHOD, AND STORAGE MEDIUM**

(30) Priority: 28.02.2024 JP 2024028896
(71) Applicant: HONDA MOTOR CO., LTD., Tokyo 105-8404 (JP); Keio University, Tokyo, 108-8345 (JP)
(72) Inventor: Hosomi, Naoki, Wako-shi, Saitama, 3510193 (JP); Iioka, Yui, Yokohama-shi, Kanagawa, 2238522 (JP); Hatanaka, Shumpei, Yokohama-shi, Kanagawa, 2238522 (JP); Sugiura, Komei, Yokohama-shi, Kanagawa, 2238522 (JP)
(74) Representative: Kiwit, Benedikt

(57) **Abstract**

An information processing apparatus acquires an image as input information and uses one or more machine learning models to extract a feature from the input information and to predict a specific region in the image based on the extracted feature. The information processing apparatus outputs a prediction result indicating the specific region including coordinates of a plurality of points surrounding the specific region and information indicating a next point after each of the plurality of points, and trains the one or more machine learning models using a loss function based on a difference between the prediction result including the coordinates of the plurality of points surrounding the specific region and information indicating the next point after each of the plurality of points and ground truth data for the prediction result.

## Description

### BACKGROUND OF THE INVENTION

### Field of the Invention

The present invention relates to an information processing apparatus, an information processing method, a generation method, and a storage medium.

### Description of the Related Art

In recent years, techniques for predicting specific regions in images, such as segmentation for predicting regions of subjects included in images and visual grounding for predicting specific regions in images corresponding to queries given in natural languages, have become known.

In Bin Yan and six others, "Universal Instance Perception as Object Discovery and Retrieval", arXiv: 2303.06674v2 [cs.CV], August 17, 2023, a region in the image corresponding to a natural language is predicted by fusing an image feature obtained from an input image and a prompt generated from a natural language sentence and executing classification for each pixel in the image with a transformer encoder interposed in the fused information. Chaoyang Zhu and nine others, "SeqTR: A Simple yet Universal Network for Visual Grounding", arXiv: 2203.16265v2 [cs.CV] July 24, 2022, a technique for predicting a point group (a point group on the outer circumference of a region) surrounding the region in the image corresponding to the query is proposed instead of predicting each pixel of a region in an image corresponding to a query of a natural language sentence.

In the technique proposed in In Bin Yan and six others, "Universal Instance Perception as Object Discovery and Retrieval", arXiv: 2303.06674v2 [cs.CV], August 17, 2023, classification is executed for each pixel in an image, and thus high accuracy can be obtained, but there is a problem that a calculation cost increases and processing time is required. On the other hand, in the technique proposed in Chaoyang Zhu and nine others, "SeqTR: A Simple yet

Universal Network for Visual Grounding", arXiv: 2203.16265v2 [cs.CV] July 24, 2022, since only the point group surrounding the region is predicted, a calculation cost and a processing time can be reduced compared with when the classification is executed for each pixel. However, accuracy of a predicted region becomes a problem.

### SUMMARY OF THE INVENTION

The present invention has been made in view of the above problems, and an object of the present invention is to realize a technique capable of improving prediction accuracy when a specific region is predicted by a point group surrounding the specific region in an image.

The present invention in its first aspect provides an information processing apparatus as specified in claims 1 to 14.

The present invention in its second aspect provides an information processing method as specified in claim 15.

The present invention in its third aspect provides a generation method as specified in claim 16.

The present invention in its fourth aspect provides a storage medium as specified in claim 17.

According to the present invention, it is possible to improve prediction accuracy when a specific region is predicted by a point group surrounding the specific region in an image.

### BRIEF DESCRIPTION OF THE DRAWINGS

FIG. 1A is a diagram (1) illustrating a configuration example of a moving body according to an embodiment;
FIG. 1B is a diagram (2) illustrating a configuration example of the moving body according to the embodiment;
FIG. 2 is a block diagram illustrating a configuration example of a control system of the moving body according to the embodiment;
FIG. 3 is a diagram illustrating a functional configuration example of a control unit 130 according to the embodiment;
FIG. 4 is a diagram illustrating a model used for a region prediction process according to the embodiment;
FIG. 5 is a diagram illustrating another example of a prediction result according to the embodiment;
FIG. 6 is a flowchart illustrating a series of operations of training a machine learning model used for the region prediction process according to the embodiment;
FIG. 7 is a flowchart illustrating another series of operations of training a machine learning model used for the region prediction process according to the embodiment; and
FIG. 8 is a flowchart illustrating a series of operations of an inference stage of the region prediction process according to the embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

In the following embodiment, a case where a model of a neural network serving as a machine learning model to be described below is executed in a moving body such as a micro mobility vehicle which is an example of an information processing apparatus will be described as an example. However, the machine learning model according to the embodiment is not limited to a moving body such as a micro mobility vehicle, and may be executed by an information processing server on a cloud which is another example of the information processing apparatus.

Processes at a training stage and an inference stage of the machine learning model according to the embodiment may be both executed on the same information processing apparatus or may be executed on separate information processing apparatuses. For example, both the process at the training stage and the process at the inference stage of the machine learning may be executed by a moving body such as a micro mobility vehicle or an information processing server, or the process at the training stage may be executed by the information processing server and the process at the inference stage may be executed by the moving body such as a micro mobility vehicle.

In the following embodiment, as an example of a moving body that is a micro mobility vehicle, an ultra-compact electric vehicle that has a riding capacity of about one person will be described. However, micro mobility vehicles may include any vehicle that travels carrying baggage along with a person, instead of carrying a person. The embodiment is not limited to the example in which a moving body is an electric vehicle, and can be applied to any moving body other than an electric vehicle.

In the moving body such as the micro mobility vehicle described above, the moving body does not necessarily travel along a specific fixed route, and travel along a specific fixed route, and because they are capable of traveling in both areas where automobiles and pedestrians move, they may travel in regions where highly accurate maps are not available. Therefore, a moving body 100 according to the embodiment recognizes a traveling region and generates a route not using a highly accurate map but using an image captured by the moving body itself, and autonomously travels along the generated route. At this time, for example, the moving body 100 according to the embodiment executes a machine learning model for appropriately predicting a region on an image corresponding to a place designated by speech in order to appropriately move to the place designated by the speech of the user.

### <Configuration of Moving Body>

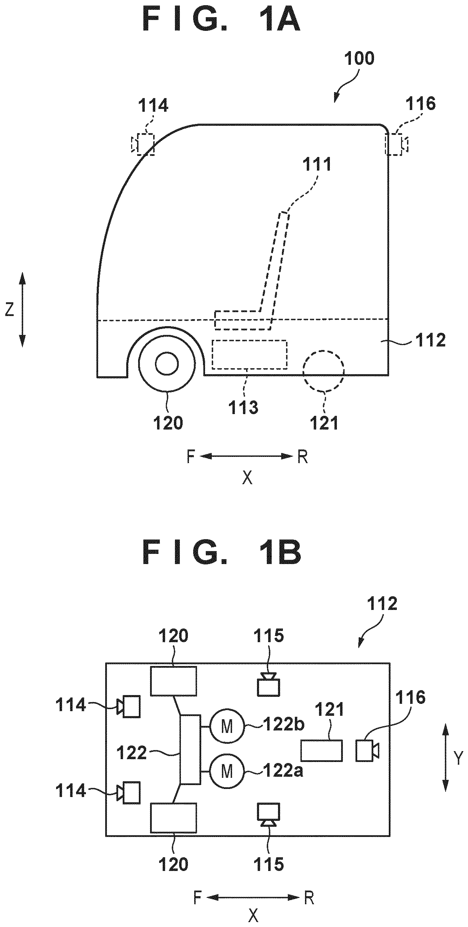

A configuration example of the moving body 100 will be described with reference to FIGS. 1A and 1B. FIG. 1A illustrates a side view of the moving body 100 according to the embodiment and FIG. 1B illustrates an internal configuration of the moving body 100. In the drawings, an arrow X indicates a front-and-rear direction of the moving body 100. F indicates the front and R indicates the rear. Arrows Y and Z respectively indicate a width direction (a left- and-right direction) and an up-and-down direction of the moving body 100.

The moving body 100 is an electric autonomous vehicle that includes a traveling unit 112 and uses a battery 113 as a main power supply. The battery 113 is, for example, a secondary battery such as a lithium ion battery, and the moving body 100 autonomously travels with the traveling unit 112 using electric power supplied from the battery 113. The traveling unit 112 includes a pair of left and right drive wheels 120 which are front wheels, and one driven wheel 121 which is a rear wheel. The traveling unit 112 illustrated in FIG. 1A is exemplary, and the traveling unit 112 may be in another form such as a form of a four-wheeled vehicle. The rear wheel is not limited to a driven wheel, and may be driven by a drive mechanism. The moving body 100 includes, for example, a seat 111 for one person, but may include a plurality of seats.

The traveling unit 112 includes a drive mechanism 122. The drive mechanism 122 is a mechanism that rotates the corresponding drive wheels 120 using motors 122a and 122b as drive sources. By rotating each of the drive wheels 120, the drive mechanism 122 is capable of moving the moving body 100 forward or backward. By making a difference in rotation between the motors 122a and 122b, the drive mechanism 122 is also capable of changing an advancing direction of the moving body 100. The driven wheel 121 is capable of making a turn using the Z direction as a rotation axis.

The moving body 100 includes detection units 114 to 116, each of which detects a target object in the surroundings of the moving body 100. The detection units 114 to 116 are an external sensor group that monitors the surroundings of the moving body 100. In the case of the embodiment, each of the detection units 114 to 116 is an image capturing device that captures an image of the surroundings of the moving body 100, and includes, for example, an optical system such as a lens and an image sensor. However, in addition to the image capturing device, a radar or a light detection and ranging (LiDAR) may be adopted.

For example, two detection units 114 are disposed in the front of the moving body 100 and are separated from each other in the Y direction, and are mainly used to acquire an image obtained by imaging in front of the moving body 100. The detection unit 114 may include one image capturing device. The detection units 115 are respectively disposed on the left side and the right side of the moving body 100, and are mainly used to acquire captured images to the sides of the moving body 100. The detection unit 116 is disposed in the rear of the moving body 100, and is mainly used to acquire an image captured by imaging to the rear of the moving body 100. The moving body 100 may not include the detection units 115 and 116.

### <Configuration Example of Control System of Moving Body>

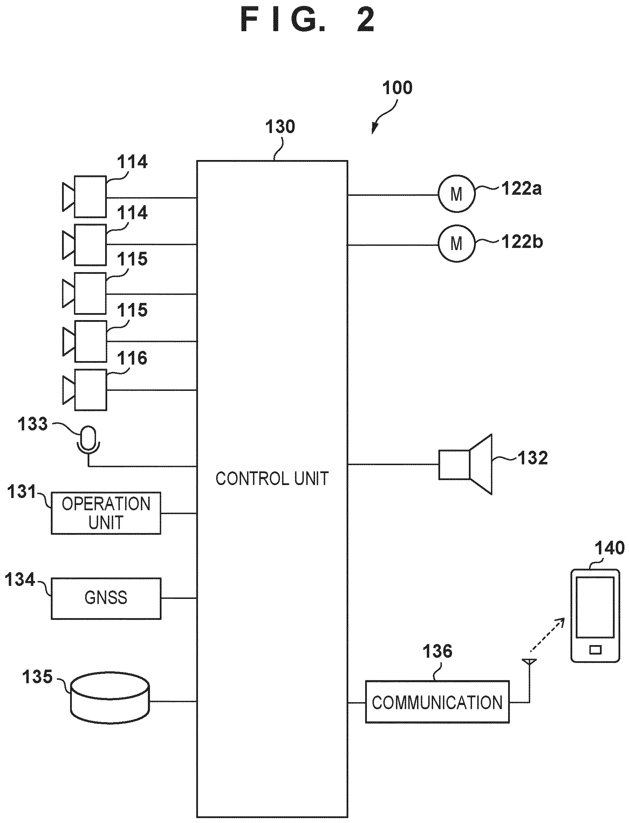

FIG. 2 is a block diagram illustrating a control system of the moving body 100. The moving body 100 includes a control unit (ECU) 130. The control unit 130 includes one or more processors including a CPU or a GPU, a memory device such as a semiconductor memory device or the like, and an interface with an external device. The memory device stores a program to be executed by the processor and various types of data (for example, weighting parameters of a trained model) used for a process executed by the processor. A plurality of sets of processors, memory devices, and interfaces may be provided for an individual functions of the moving body 100 to be able to communicate with each other.

The control unit 130 acquires outputs (for example, images) from the detection units 114 to 116, input information of an operation unit 131, voice information that has been input from a voice input device 133, and the like, and executes various processes. The control unit 130 executes, for example, control of the motors 122a and 122b (travel control of the traveling unit 112) and display control of a display panel included in the operation unit 131, gives a notification to an occupant of the moving body 100 by voice, and outputs information. As will be described below, the control unit 130 executes a process (a region prediction process) of predicting a region in an image corresponding to a place designated with language information. The region prediction process is executed using a machine learning model (for example, a deep neural network).

The voice input device 133 includes, for example, a microphone and collects voices, such as speeches, of an occupant (a user) of the moving body 100. The Global Navigation Satellite System (GNSS) sensor 134 receives a GNSS signal and detects a current position of the moving body 100.

A storage device 135 includes a nonvolatile recording medium that stores various pieces of data. The storage device 135 may also store a program to be executed by the processor, data used for a process by the processor, and the like. The storage device 135 may store various parameters (for example, trained weighting parameters or hyperparameters of the deep neural network, or the like) of the machine learning model executed by the control unit 130.

A communication device 136 is a communication device capable of communicating with an external device (for example, a communication terminal 140 carried by the user or an information processing server) through wireless communication, such as Wi-Fi or the 5th generation mobile communication.

### <Functional Configuration Example of Control Unit>

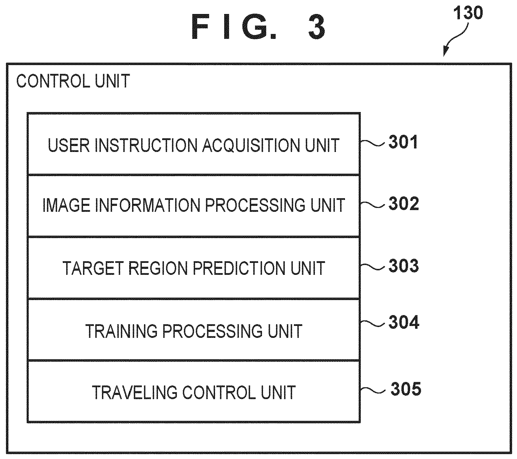

Next, a functional configuration example of the control unit 130 according to the embodiment will be described with reference to FIG. 3. The function of each unit of the control unit 130 illustrated in FIG. 3 is realized, for example, by one or more processors of the control unit 130 executing a program stored in a memory or the like. The example illustrated in FIG. 3 shows a case where the control unit 130 includes both a target region prediction unit 303 and a training processing unit 304. That is, the example illustrated in FIG. 3 shows a case where the control unit 130 can execute both a process at an inference stage using the trained machine learning model and a process at a training stage at which the machine learning model is trained. However, when the control unit 130 executes only the process at the inference stage using the trained machine learning model, the control unit 130 may not include the training processing unit 304. In this case, the process at the training stage at which the machine learning model is trained is executed in another information processing apparatus.

When the process at the inference stage is executed, an instruction acquisition unit 301 acquires a user instruction input via the operation unit 131 or the voice input device 133. The user instruction by a voice input via the voice input device 133 may be converted into a speech sentence described in the natural language by voice recognition, or may be acquired as voice information including a speech in the natural language. The user instruction may be text described in the natural language input via the operation unit 131. In any mode, the user instruction is obtained as language information including a designation of a place indicated in the natural language. When the process at the training stage is executed, the instruction acquisition unit 301 acquires a user instruction (that is, language information including a designation of a place indicated in a natural language) included in training data to be described below.

When the process at the inference stage is executed, the image information acquisition unit 302 acquires outputs (images) of the detection units 114 to 116. When the process at the training stage is executed, the image information acquisition unit 302 acquires an image included in training data to be described below.

The target region prediction unit 303 executes the region prediction process using the machine learning model using the language information for designating a place from the instruction acquisition unit 301 and an image acquired from the image information acquisition unit 302. The machine learning model may be configured with one or more machine learning models. When the process at the inference stage is executed, the target region prediction unit 303 is executed using parameters of the trained machine learning model (for example, weighting parameters of an optimized neural network).

The control unit 130 can recognize a position and a shape of an obstacle, a traveling region, or the like using image information in addition to the process executed by the target region prediction unit 303. A position and a shape of an obstacle, a traveling area, a road structure, and the like in the front of the moving body 100 may be recognized, for example, by applying a pre-trained machine learning model for image recognition (different from the model used for the region prediction process) to the images obtained from the two detection units 114. Estimation of a depth from the moving body 100 in which the images obtained from the two detection units 114 are used as stereo images may be included.

The training processing unit 304 trains the machine learning model used for the target region prediction unit 303 to generate a trained machine learning model. The training processing unit 304 calculates a value of a loss function based on a difference between a prediction result by the target region prediction unit 303 and ground truth data for the prediction result. At this time, the machine learning model of the target region prediction unit 303 outputs the prediction result using parameters (for example, the weighting parameters of the neural network) of the machine learning model at a stage in the middle of learning. The training processing unit 304 changes the parameters of the machine learning model to reduce the value of the loss function. The training processing unit 304 controls the process at the training stage to repeat the prediction by the target region prediction unit 303, the calculation of the value of the loss function, and the change in the parameters of the machine learning model using the training data.

The training data includes a plurality of sets of data sets each including an image, language information that is expressed in a natural language and includes a designation of a place in the image, and ground truth data that indicates a region in the image. Details of the ground truth data will be further described below.

The travel control unit 305 determines a traveling route to a designated place based on the region in the image corresponding to the instruction predicted by the target region prediction unit 303 and the traveling region recognized using the image information, and determines the control amount of the moving body according to the determined traveling route. The travel control unit 305 is executed only when the target region prediction unit 303 executes the process at the inference stage. A method of determining a traveling route with a region in an image as a target region may be any method. A known method may be used. The travel control unit 305 further controls traveling of the moving body 100 (for example, controls the motors 122a and 122b) in accordance with the determined control amount.

### <Operation of Machine Learning Model Used in Region Prediction Process>

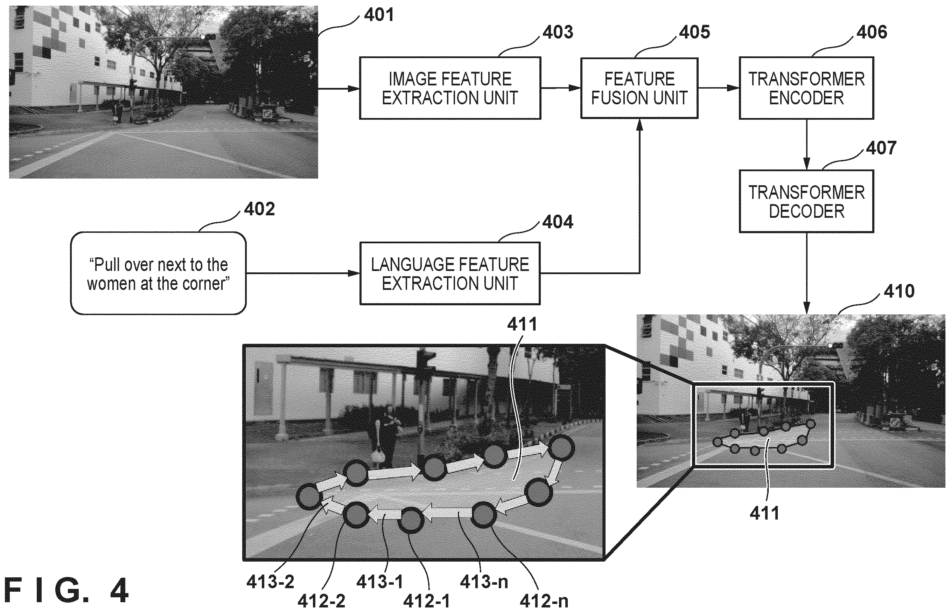

A machine learning model used for the region prediction process according to the embodiment of the embodiment will be described with reference to FIG. 4.

An image 401 is an image acquired by the image information acquisition unit 302 and is a captured image or an image included in training data. An image feature extraction unit 403 inputs the image 401 and extracts an image feature. The image feature extraction unit 403 can extract the image feature by, for example, a convolution or pooling process, but the image feature extraction unit 403 may extract the image feature in another configuration such as a transformer.

Language information 402 is language information acquired by the instruction acquisition unit 301 and is language information from the voice input device 133 or the operation unit 131 or language information included in the training data. The language information 402 includes a designation of a place described in a natural language, for example, "Pull over next to the woman at the corner". The designation of the place corresponds to a specific region in the image.

The language feature extraction unit 404 can be configured by, for example, a machine learning model using a transformer such as BERT, a recursive machine learning model such as GRU, or the like. The language feature extraction unit 404 extracts a language feature included in the language information 402.

The feature fusion unit 405 fuses the image feature extracted by the image feature extraction unit 403 and the language feature extracted by the language feature extraction unit 404 to generate a fusion feature (multi-modal feature). The feature fusion unit 405 can generate a fusion feature with an arbitrary configuration. The feature fusion unit 405 may include, for example, a pixel-word attention module (PWAM). For example, the PWAM inputs an image feature as a query of an attention mechanism and inputs a language feature as a key and a value of the attention mechanism, and generates a fusion feature in which the language feature is fused with the image feature. The feature fusion unit 405 may connect the image feature extracted by the image feature extraction unit 403 and the fusion feature to obtain a new fusion feature. Alternatively, the feature fusion unit 405 may further combine the language feature from the language feature extraction unit 404 with the new fusion feature to further generate a new fusion feature.

The transformer encoder 406 is an encoder that inputs the fusion feature data generated by the feature fusion unit 405 and further encodes the multi-modal feature. That is, a feature effective for a task is further extracted from the input multi-modal feature. In the example illustrated in FIG. 4, the case where the encoder that encodes the fusion feature is a transformer has been described as an example. However, the encoder may be configured by a model other than the transformer.

The transformer decoder 407 inputs the feature encoded by the transformer encoder 406 and predicts a specific region in the image. By using the transformer as a decoder, a highly accurate prediction result can be output. In the example illustrated in FIG. 4, the case where the encoded feature is decoded using the transformer has been described as an example. However, the decoder may be configured by, for example, a recursive machine learning model other than the transformer. For example, when a recursive machine learning model such as LSTM or GRU is used, a model that has a relatively smaller size than the transformer can be used to speed up a process.

The transformer decoder 407 outputs a prediction result indicating a specific region including coordinates of a plurality of points surrounding the specific region in the image and information indicating a next point after each of the plurality of points. Information indicating a point next to each point of the plurality of points is represented by a vector from each point of the plurality of points to the next point.

An image 410 illustrated in FIG. 4 schematically shows an example in which a prediction result is superimposed on an input image. The region 411 is the predicted specific region. More specifically, the region 411 is a target region in the image corresponding to a designation of the place in the language information. In the example illustrated in FIG. 4, when the language information 402 is "Pull over next to the woman at the corner", the specific region corresponds to a place in front of women at a corner. Points 412-1, 412-2, ..., and 412-n indicate a plurality of points (point group) surrounding the specific region. The point group is a vertex of the specific region represented with a polygon. Vectors 413-1, 413-2, ..., and 413-n are information indicating the next point after each point of the point group. Each vector is represented by, for example, a difference between the coordinates of each point and the next point, and represents a relationship between points in the point group. In the embodiment, a trajectory surrounding a region with a directional point group is predicted by including the point group and the vectors in the prediction result. As described above, in the prediction of the region, not only by simply predicting the position of the point group but also predicting the relationship between the points of the point group, it is possible to constrain the relationship between the point groups to be appropriate in the prediction of the region and predict the region with higher accuracy.

When the transformer decoder 407 outputs a prediction result including coordinates and vectors of a point group surrounding the specific region in the image, ground truth data indicating a region in the image included in the training data includes the coordinates and the vectors of the point group surrounding the specific region. For example, a prediction result rₚ for a polygon that has n vertices includes (x₁, y₁, Δx₁₂, Δy₁₂, x₂, y₂, ..., xₙ, yₙ, Δxₙ₁, Δyₙ₁). Here, (x₁, y₁) is a coordinate of a first point in the point group, and (Δx₁₂, Δy₁₂) represents a vector from a first point to a second point. The ground truth data r_{g} has a similar format and includes (x₁, y₁, Δx₁₂, Δy₁₂, x₂, y₂, ..., xₙ, yₙ, Δxₙ₁, Δyₙ₁).

In order to train one or more machine learning models described with reference to FIG. 4, the training processing unit 304 calculates a value of a loss function based on a difference between the prediction result including the coordinates and the vectors of the point group surrounding the specific region and the ground truth data for the prediction result. The loss function includes, for example, a loss based on a sum of differences in the coordinates of the point group surrounding the specific region and a loss based on a sum of dissimilarity (for example, 1-vector similarity) between vectors with respect to the vectors. The dissimilarity between the vectors can be obtained, for example, by calculating 1-cosine similarity. The training processing unit 304 changes parameters of the one or more machine learning models to reduce the loss function.

The training processing unit 304 can use a loss function based on an optimum transport cost for the point group surrounding the specific region in the prediction result and the point group surrounding the specific region in the ground truth data. An optimum transport algorithm is an algorithm that calculates a transport plan for moving a set of vertices using the minimum transport cost. That is, it is possible to use a cost for minimizing the transport cost for moving the set of the vertices of the prediction result to the set of the vertices of the ground truth data. By using the optimum transport cost for the loss function, it is possible to calculate the value of the loss function with a difference in a position of a corresponding point having a smallest transport cost. That is, when the prediction result and the ground truth data are the same n-polygon, it is possible to solve a problem that a loss increases due to a difference in an order of vertices even though the positions of the vertices are approximate. As the optimum transport algorithm, for example, a Sinkhorn algorithm can be used.

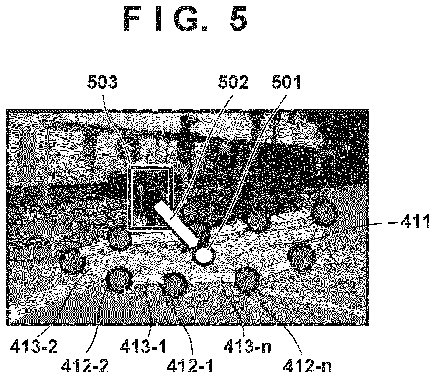

The prediction result of machine learning according to the embodiment is not limited to the above example, and can further include information. For example, FIG. 5 illustrates another example of the prediction result according to the embodiment. The prediction result illustrated in FIG. 5 includes the coordinates of a central point 501 (target position) in the specific region in addition to the coordinates (412-1, ..., 412-n) of the point group surrounding the specific region and the vectors (413-1, ..., 413-n) indicating the next point after each point of the plurality of points. The coordinates of the central point 501 in the specific region may be represented by a vector 502 from the position of a target 503 in an image to coordinates of the central point 501.

By predicting the central point 501 in the specific region separately from the coordinates of the point group, the region of the prediction result can be output in the circumference of the region that can be a target position by adding a constraint by a central position. By using the vector from the position of the target, a positional relationship with the target can be considered, and it is possible to reduce a likelihood that a region not appropriate as a designated place (for example, a region corresponding to a place where a moving body cannot stop) corresponds to a prediction result.

When the machine learning model (transformer decoder 407) used in the target region prediction unit 303 outputs the prediction result including the central point 501, the training processing unit 304 trains one or more machine learning models using the loss function in which the central point 501 is taken into account. Specifically, the training processing unit 304 trains one or more machine learning models by using one loss function based on a difference between a prediction result including coordinates of a point group surrounding a specific region, a vector indicating a next point after each point of the point group, and coordinates of a central point in the specific region, and ground truth data for the prediction result. In this case, a processing cost can be reduced through relatively simple calculation in which one loss function is calculated, and the machine learning model can be optimized.

The training processing unit 304 may train the prediction of the specific region and the prediction of the target position as separate tasks through multi-task learning. That is, the training processing unit 304 calculates the value of the first loss function based on the difference between a first portion of the prediction result including the coordinates of the point group surrounding the specific region and the vector indicating the next point after each point of the point group and the ground truth for the first portion of the prediction result in the ground truth data. The training processing unit 304 calculates the value of the second loss function based on the difference between a second portion of the prediction result including the target position (coordinates of the central point in the specific region) and a ground truth for the second portion of the prediction result in the ground truth data. The training processing unit 304 trains one or more machine learning models using the value of the first loss function and the value of the second loss function. In this way, prediction accuracy of the specific region and prediction accuracy of the target position can be improved through the multi-task learning.

### <Series of Operations of Training Model Used in Region Prediction Processing>

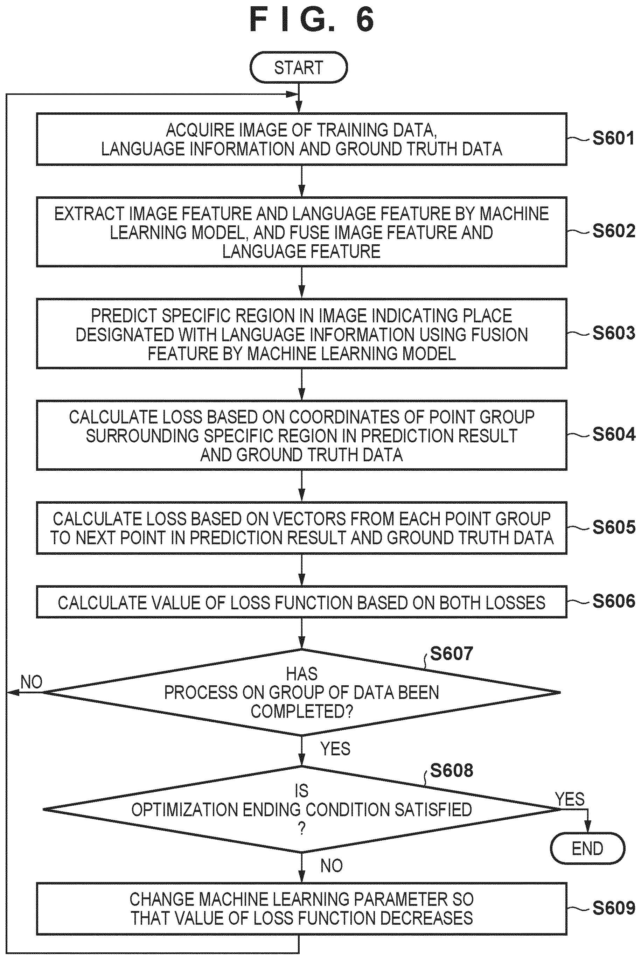

Next, a series of operations of training the machine learning model used in the region prediction processing will be described with reference to FIG. 6. This process is realized as the control unit 130 loads and executes a program stored in the storage device 135 on a memory device of the control unit 130. When the control unit 130 does not include the training processing unit 304, the following process may be realized, for example, when one or more processors of the information processing server that is separate from the moving body 100 executes the program. In this case, the one or more processors of the information processing server executes the program to realize operations of the instruction acquisition unit 301, the image information acquisition unit 302, the target region prediction unit 303, and the training processing unit 304.

In S601, for example, the instruction acquisition unit 301 and the image information acquisition unit 302 acquire language information of the training data (that is, information including a designation of a place indicated in a natural language) and an image of the training data, respectively. The training processing unit 304 acquires the corresponding ground truth data (for example, the coordinates and the vectors of the point group surrounding the specific region in the image) of the training data.

In S602, as described above, the target region prediction unit 303 extracts the image feature and the language feature by the machine learning model (the image feature extraction unit 403, the language feature extraction unit 404, and the feature fusion unit 405), and fuses the image feature and the language feature.

In S603, as described above, the target region prediction unit 303 predicts the specific region in the image indicating the place designated with the language information using the fusion feature by the machine learning model (the transformer encoder 406 and the transformer decoder 407). The machine learning model outputs the prediction result using the machine learning parameters at the training stage. At this time, the target region prediction unit 303 outputs, for example, the prediction result rₚ (x₁, y₁, Δx₁₂, Δy₁₂, x₂, y₂, ..., xₙ, yₙ, Δxₙ₁, Δyₙ₁) for a polygon that has n vertices.

In S604, the training processing unit 304 calculates a loss based on the coordinates of the point group surrounding the specific region in the prediction result and the ground truth data as described above. The training processing unit 304 uses, for example, the ground truth data r_{g} (x₁, y₁, Δx₁₂, Δy₁₂, x₂, y₂, ..., xₙ, yₙ, Δxₙ₁, Δyₙ₁) acquired in S601.

In S605, the training processing unit 304 calculates a loss based on the vectors from each point group to the next point in the prediction result and the ground truth data as described above. In S606, the training processing unit 304 calculates a value of the loss function based on both the losses as described above. For example, the training processing unit 304 calculates both the losses as separate loss functions through multi-task learning.

In S607, the training processing unit 304 determines whether a process on a group of data in the training data has been completed. When it is determined that the process on the group of data has not been completed, the training processing unit 304 returns the process to S601 and repeats calculation of the value of the loss function using other data. When the training processing unit 304 determines that the process on the group of data has been completed, the process proceeds to S608.

In S608, the training processing unit 304 determines whether an optimization ending condition is satisfied. An optimization processing condition may be any condition, but may include repetition of predetermined iteration, a decrease in the value of the loss function to a predetermined value or less, and the like. When the training processing unit 304 determines that the optimization ending condition is satisfied, this series of operations ends. Otherwise, the process proceeds to S609.

In S609, the training processing unit 304 changes the machine learning parameters so that the value of the loss function decreases (for example, based on a calculation result of back propagation). Thereafter, the training processing unit 304 returns the process to S601.

In this way, it is possible to generate a machine learning model that improves prediction accuracy when the specific region is predicted by the point group surrounding the specific region in the image.

### <Another Series of Operations for Learning Model Used in Region Prediction Process>

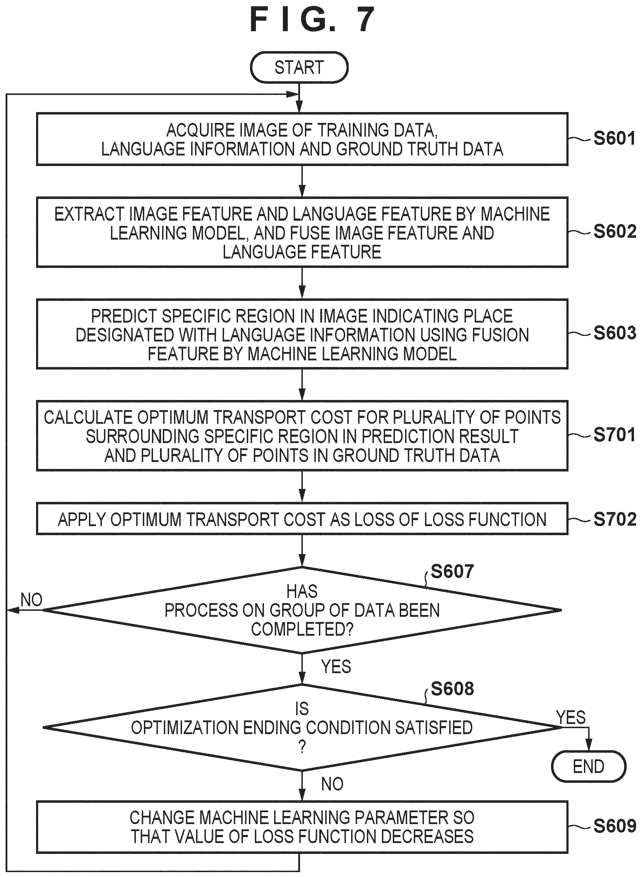

Next, another series of operations of training the machine learning model used in the region prediction process will be described with reference to FIG. 7. This process is realized as the control unit 130 loads and executes a program stored in the storage device 135 on a memory device of the control unit 130.
The information processing server may realize the operations of the instruction acquisition unit 301, the image information acquisition unit 302, the target region prediction unit 303, and the training processing unit 304 by causing one or more processors to execute the program. The series of operations illustrated in FIG. 7 is different from the example of FIG. 6 in that the optimum transport cost is used for the cost function.

The control unit 130 executes the processes of S601 to S603 similarly to the processes illustrated in FIG. 6, and outputs a prediction result obtained by predicting the specific region in the image by the machine learning model.

In S701, as described above, the training processing unit 304 calculates the optimum transport cost for the plurality of points (point group) surrounding the specific region in the prediction result and the plurality of points (point group) in the ground truth data.

In S702, the training processing unit 304 applies the calculated optimum transport cost as the loss of the loss function. As described above, the training processing unit 304 may use the optimum transport cost as the loss based on the coordinates of the point group surrounding the specific region in the prediction result and the ground truth data, and separately calculate the loss based on the vector from each point group to the next point in the prediction result and the vector in the ground truth data.

Thereafter, the training processing unit 304 executes the processes of S607 to S609. When it is determined in S608 that the optimization ending condition is satisfied, the training processing unit 304 ends the series of operations.

Even in this case, it is possible to generate the machine learning model that improves prediction accuracy when the specific region is predicted by the point group surrounding the specific region in the image.

### <Series of Operations in Inference Stage of Machine Learning Model>

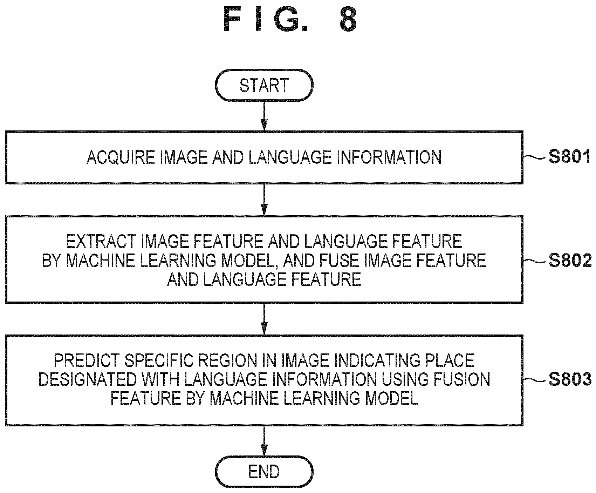

Next, a series of operations at the inference stage of the machine learning model will be described with reference to FIG. 8. This process is realized as the control unit 130 loads and executes a program stored in the storage device 135 on a memory device of the control unit 130.

In S801, for example, the instruction acquisition unit 301 acquires a user instruction input via the operation unit 131 or the voice input device 133 as language information (that is, information including a designation of a place indicated in a natural language). The image information acquisition unit 302 acquires an image from the detection unit 114.

In S802, as described above, the target region prediction unit 303 extracts the image feature and the language feature by the machine learning model (the image feature extraction unit 403, the language feature extraction unit 404, and the feature fusion unit 405), and fuses the image feature and the language feature.

In S803, as described above, the target region prediction unit 303 predicts the specific region in the image indicating the place designated by the language information using the fusion feature by the machine learning model (the transformer encoder 406 and the transformer decoder 407). At this time, the target region prediction unit 303 outputs, for example, the prediction result rₚ (x₁, y₁, Δx₁₂, Δy₁₂, x₂, y₂, ..., xₙ, yₙ, Δxₙ₁, Δyₙ₁) for a polygon that has n vertices. When the prediction result is output, the control unit 130 ends the series of operations.

As described above, in the above-described embodiment, a feature is extracted from the input information using one or more machine learning models, and the specific region in the image is predicted based on the extracted feature. At this time, one or more machine learning models output the prediction result indicating the specific region including the coordinates of the point group surrounding the specific region and the vector indicating the next point after each point of the point group. In order to train the machine learning model, a loss function based on a difference between the prediction result including coordinates of a point group surrounding the specific region and the vector indicating the next point after each point of the point group and the ground truth data for the prediction result is used. In this way, it is possible to improve the prediction accuracy when the specific region is predicted with the point group surrounding the specific region in the image.

The above-described machine learning model may be executed by the information processing apparatus in various modes. For example, the information processing apparatus may be the moving body 100, or may be configured to be embedded in the moving body 100 (that is, may be the control unit 130). The information processing apparatus may be an information processing server that acquires an image and a voice that have been acquired by the moving body 100 and that executes the above machine learning model.

### <Conclusion of Embodiments>

The above-described embodiments include an information processing apparatus, an information processing method, a generation method, a learning model, a program, and a storage medium described in the following items.

### (Item 1)

An information processing apparatus comprising:
an acquisition unit configured to acquire an image as input information;
a prediction unit configured with one or more machine learning models that extract a feature from the input information and predict a specific region in the image based on the extracted feature; and
a processing unit,
wherein the prediction unit outputs a prediction result indicating the specific region including coordinates of a plurality of points surrounding the specific region and information indicating a next point after each of the plurality of points, and
wherein the processing unit trains the one or more machine learning models using a loss function based on a difference between the prediction result including the coordinates of the plurality of points surrounding the specific region and information indicating the next point after each of the plurality of points and ground truth data for the prediction result

According to the embodiment, it is possible to provide an information processing apparatus that improves prediction accuracy when a specific region is predicted with a point group surrounding the specific region in an image. More specifically, not only by simply predicting the position of the point group in the prediction of the region, but also by predicting a relationship between the points of the point group, the machine learning model that predicts the region with higher accuracy is generated so that the relationship between the point groups is constrained to be appropriate in the prediction of the region.

### (Item 2)

The information processing apparatus according to Item 1,
wherein the acquisition unit further acquires language information including a designation of a place indicated in a natural language as the input information, and
wherein the prediction unit predicts, as the specific region, a target region in the image corresponding to the designation of the place based on an image feature extracted from the image and a language feature extracted from the language information.

According to the embodiment, it is possible to improve prediction accuracy when a specific region in an image specified with language information is predicted.

### (Item 3)

The information processing apparatus according to Item 1, wherein the loss function is based on an optimum transport cost for the plurality of points surrounding the specific region in the prediction result and a plurality of points surrounding the specific region in the ground truth data.

According to the embodiment, it is possible to solve a problem that a loss increases due to the difference in an order of vertices despite approximation of positions of the vertices of the prediction result and the ground truth data to each other.

### (Item 4)

The information processing apparatus according to Item 1, wherein the loss function includes a loss based on coordinates of a plurality of points surrounding the specific region and a loss based on similarity between vectors with respect to a vector indicating a next point after each of the plurality of points.

According to the embodiment, it is possible to calculate losses of both coordinates and vectors of the point group surrounding the specific region in the image in accordance with an easy calculation method.

### (Item 5)

The information processing apparatus according to Item 1, wherein the processing unit outputs the prediction result including coordinates of a plurality of points surrounding the specific region, information indicating a next point after each of the plurality of points, and coordinates of a central point in the specific region.

According to the embodiment, it is possible to output a region of the prediction result around the region that can be the target position by applying a constraint by a central position.

### (Item 6)

The information processing apparatus according to Item 5, wherein the processing unit trains the one or more machine learning models using one loss function based on a difference between the prediction result including the coordinates of the plurality of points surrounding the specific region, the information indicating a next point after each of the plurality of points, and the coordinates of the central point in the specific region, and the ground truth data for the prediction result.

According to the embodiment, it is possible to curb a processing cost by relatively simple calculation executed to calculate one loss function, and optimize the machine learning model.

### (Item 7)

The information processing apparatus according to Item 5, wherein the processing unit trains the one or more machine learning models using a first loss function based on a difference between a first portion of a prediction result including the coordinates of the plurality of points surrounding the specific region and the information indicating the next point after each of the plurality of points and a ground truth for the first portion of the prediction result in the ground truth data, and a second loss function based on a difference between a second portion of a prediction result including the coordinates of the central point in the specific region and a ground truth for the second portion of the prediction result in the ground truth data.

According to the embodiment, it is possible to improve the prediction accuracy of a specific region and the prediction accuracy of a target position by multi-task learning.

### (Item 8)

The information processing apparatus according to Item 5, wherein the coordinates of the central point in the specific region are represented by information of a vector from a position of a target in the image to coordinates of the central point in the specific region.

According to the embodiment, it is possible to consider a positional relationship with a target and reduce a case where an area that is not appropriate as a designated place (for example, an area corresponding to a place where the moving body cannot stop) is used as a prediction result.

### (Item 9)

The information processing apparatus according to Item 1, wherein information indicating the next point after each of the plurality of points is represented by a vector from each of the plurality of points to the next point.

According to the embodiment, it is possible to describe information indicating orientation of the point group in accordance with an easy method and to facilitate an operation of the loss function.

### (Item 10)

The information processing apparatus according to Item 2, wherein the prediction unit generates a fusion feature obtained by fusing the image feature and the language feature based on the input information, and predicts a specific region in the image based on the fusion feature.

According to the embodiment, it is possible to predict a region where an image feature and a language feature are appropriately associated with each other.

### (Item 11)

The information processing apparatus according to Item 10, wherein the one or more machine learning models include a recursive machine learning model that inputs the generated fusion feature and outputs the prediction result indicating the specific region including the coordinates of the plurality of points surrounding the specific region and the information indicating the next point after each of the plurality of points.

According to the embodiment, when a recursive machine learning model is used, it is possible to speed up a process using a model that has a relatively smaller size than the transformer. It is possible to generate a trajectory in which an anteroposterior relationship at a plurality of points is taken into account.

### (Item 12)

The information processing apparatus according to Item 10, wherein the one or more machine learning models include a transformer decoder that inputs the generated fusion feature and outputs the prediction result indicating the specific region including the coordinates of the plurality of points surrounding the specific region and the information indicating the next point after each of the plurality of points.

According to the embodiment, by using the transformer as a decoder, it is possible to output a highly accurate prediction result.

### (Item 13)

The information processing apparatus according to Item 10, wherein the one or more machine learning models include an encoder that inputs the generated fusion feature and encodes the feature, and a decoder that inputs the encoded feature and outputs the prediction result indicating the specific region including the coordinates of the plurality of points surrounding the specific region and the information indicating the next point after each of the plurality of points.

According to the embodiment, it is possible to further extract a feature effective for prediction from the fusion feature, and output a highly accurate prediction result based on the encoded effective feature.

### (Item 14)

The information processing apparatus according to Item 13, wherein the encoder is a transformer encoder, and the decoder is a transformer decoder.

According to the embodiment, by using the transformer for both the encoder and the decoder, it is possible to accurately extract an effective feature from the fusion feature and output a highly accurate prediction result from the encoded effective feature.

### (Item 15)

According to the embodiment, it is possible to provide an information processing method of improving prediction accuracy when a specific region is predicted with a point group surrounding the specific region in an image.

### (Item 16)

An information processing method executed in an information processing apparatus, the method comprising:
acquiring an image as input information;
extracting a feature from the input information acquired in the acquiring by one or more machine learning models, and predicting a specific region in the image based on the extracted feature; and
processing,
wherein, in the extracting and predicting, the one or more machine learning models output a prediction result indicating the specific region including coordinates of a plurality of points surrounding the specific region and information indicating a next point after each of the plurality of points, and
wherein, in the processing, the one or more machine learning models are trained using a loss function based on a difference between the prediction result including the coordinates of the plurality of points surrounding the specific region and information indicating the next point after each of the plurality of points and ground truth data for the prediction result.

According to the embodiment, it is possible to generate a machine learning model that improves prediction accuracy when a specific region is predicted with a point group surrounding the specific region in an image.

### (Item 17)

A machine learning model executed in an information processing apparatus, the machine learning model comprising:
a prediction unit configured to extract a feature from an image input as input information and predict a specific region in the image based on the extracted feature,
wherein the prediction unit outputs a prediction result indicating the specific region including coordinates of a plurality of points surrounding the specific region and information indicating a next point after each of the plurality of points, and
wherein the machine learning model is trained using a loss function based on a difference between the prediction result including coordinates of a plurality of points surrounding the specific region and information indicating a next point after each of the plurality of points and ground truth data for the prediction result.

According to the embodiment, it is possible to improve prediction accuracy when the specific region is predicted with a point group surrounding the specific region in an image.

### (Item 18)

A program causing a computer to function as each unit of the information processing apparatus according to any one of Items 1 to 14.

According to the embodiment, it is possible to provide a program generating a machine learning model that improves prediction accuracy when a specific region is predicted with a point group surrounding the specific region in an image.

### (Item 19)

A storage medium storing a program causing a computer to function as each unit of the information processing apparatus according to any one of Items 1 to 14.

According to the embodiment, it is possible to provide a storage medium generating a machine learning model that improves prediction accuracy when a specific region is predicted with a point group surrounding the specific region in an image.

The invention is not limited to the foregoing embodiments, and various variations/changes are possible within the spirit of the invention.

## Claims

1. An information processing apparatus comprising:
acquisition means configured to acquire an image as input information;
prediction means configured with one or more machine learning models that extract a feature from the input information and predict a specific region in the image based on the extracted feature; and
processing means,
wherein the prediction means outputs a prediction result indicating the specific region including coordinates of a plurality of points surrounding the specific region and information indicating a next point after each of the plurality of points, and
wherein the processing means trains the one or more machine learning models using a loss function based on a difference between the prediction result including the coordinates of the plurality of points surrounding the specific region and information indicating the next point after each of the plurality of points and ground truth data for the prediction result.

2. The information processing apparatus according to claim 1,
wherein the acquisition means further acquires language information including a designation of a place indicated in a natural language as the input information, and
wherein the prediction means predicts, as the specific region, a target region in the image corresponding to the designation of the place based on an image feature extracted from the image and a language feature extracted from the language information.

3. The information processing apparatus according to claim 1, wherein the loss function is based on an optimum transport cost for the plurality of points surrounding the specific region in the prediction result and a plurality of points surrounding the specific region in the ground truth data.

4. The information processing apparatus according to claim 1, wherein the loss function includes a loss based on coordinates of a plurality of points surrounding the specific region and a loss based on similarity between vectors with respect to a vector indicating a next point after each of the plurality of points.

5. The information processing apparatus according to claim 1, wherein the processing means outputs the prediction result including coordinates of a plurality of points surrounding the specific region, information indicating a next point after each of the plurality of points, and coordinates of a central point in the specific region.

6. The information processing apparatus according to claim 5, wherein the processing means trains the one or more machine learning models using one loss function based on a difference between the prediction result including the coordinates of the plurality of points surrounding the specific region, the information indicating a next point after each of the plurality of points, and the coordinates of the central point in the specific region, and the ground truth data for the prediction result.

7. The information processing apparatus according to claim 5, wherein the processing means trains the one or more machine learning models using a first loss function based on a difference between a first portion of a prediction result including the coordinates of the plurality of points surrounding the specific region and the information indicating the next point after each of the plurality of points and a ground truth for the first portion of the prediction result in the ground truth data, and a second loss function based on a difference between a second portion of a prediction result including the coordinates of the central point in the specific region and a ground truth for the second portion of the prediction result in the ground truth data.

8. The information processing apparatus according to claim 5, wherein the coordinates of the central point in the specific region are represented by information of a vector from a position of a target in the image to coordinates of the central point in the specific region.

9. The information processing apparatus according to claim 1, wherein information indicating the next point after each of the plurality of points is represented by a vector from each of the plurality of points to the next point.

10. The information processing apparatus according to claim 2, wherein the prediction means generates a fusion feature obtained by fusing the image feature and the language feature based on the input information, and predicts a specific region in the image based on the fusion feature.

11. The information processing apparatus according to claim 10, wherein the one or more machine learning models include a recursive machine learning model that inputs the generated fusion feature and outputs the prediction result indicating the specific region including the coordinates of the plurality of points surrounding the specific region and the information indicating the next point after each of the plurality of points.

12. The information processing apparatus according to claim 10, wherein the one or more machine learning models include a transformer decoder that inputs the generated fusion feature and outputs the prediction result indicating the specific region including the coordinates of the plurality of points surrounding the specific region and the information indicating the next point after each of the plurality of points.

13. The information processing apparatus according to claim 10, wherein the one or more machine learning models include an encoder that inputs the generated fusion feature and encodes the feature, and a decoder that inputs the encoded feature and outputs the prediction result indicating the specific region including the coordinates of the plurality of points surrounding the specific region and the information indicating the next point after each of the plurality of points.

14. The information processing apparatus according to claim 13, wherein the encoder is a transformer encoder, and the decoder is a transformer decoder.

15. An information processing method executed in an information processing apparatus, the method comprising:
acquiring an image as input information;
extracting a feature from the input information acquired in the acquiring by one or more machine learning models, and predicting a specific region in the image based on the extracted feature; and
processing,
wherein, in the extracting and predicting, the one or more machine learning models output a prediction result indicating the specific region including coordinates of a plurality of points surrounding the specific region and information indicating a next point after each of the plurality of points, and
wherein, in the processing, the one or more machine learning models are trained using a loss function based on a difference between the prediction result including the coordinates of the plurality of points surrounding the specific region and information indicating the next point after each of the plurality of points and ground truth data for the prediction result.

16. A method of generating one or more machine learning models executed in an information processing apparatus, the method comprising:
acquiring an image as input information;
extracting a feature from the input information acquired in the acquiring by one or more machine learning models, and predicting a specific region in the image based on the extracted feature; and
generating the one or more machine learning models, wherein, in the extracting and predicting, the one or more machine learning models output a prediction result indicating the specific region including coordinates of a plurality of points surrounding the specific region and information indicating a next point after each of the plurality of points, and
wherein, in the generating, the one or more machine learning models are generated by training using a loss function based on a difference between the prediction result including the coordinates of the plurality of points surrounding the specific region and information indicating the next point after each of the plurality of points and ground truth data for the prediction result.

17. A computer readable storage medium storing a program causing a computer to function as each means of an information processing apparatus, the information processing apparatus comprising:
acquisition means configured to acquire an image as input information;
prediction means configured with one or more machine learning models that extract a feature from the input information and predict a specific region in the image based on the extracted feature; and
processing means,
wherein the prediction means outputs a prediction result indicating the specific region including coordinates of a plurality of points surrounding the specific region and information indicating a next point after each of the plurality of points, and
wherein the processing means trains the one or more machine learning models using a loss function based on a difference between the prediction result including the coordinates of the plurality of points surrounding the specific region and information indicating the next point after each of the plurality of points and ground truth data for the prediction result.
